(19) Europäisches Patentamt
European Patent Office
Office européen des brevets

(11) **EP 4 765 543 A1**

(12) **EUROPEAN PATENT APPLICATION**

(43) Date of publication:
24.06.2026  Bulletin 2026/26

(21) Application number: 25222406.8

(22) Date of filing: 10.12.2025

(51) International Patent Classification (IPC):
*H02J 3/00* (2026.01)  *H02J 3/28* (2026.01)
*H02J 3/38* (2026.01)  *H02J 15/50* (2026.01)

(52) Cooperative Patent Classification (CPC):
**H02J 3/381; H02J 3/003; H02J 3/28; H02J 15/50;**
H02J 2101/24; H02J 2101/28

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 10.12.2024  GB 202418091
14.08.2025  GB 202513344

(71) Applicants:
• **Challoch Energy Limited
Bridgend Wales CF31 1BE (GB)**
• **University College Cardiff Consultants Limited
Cardiff South Wales CF10 3AT (GB)**

(72) Inventors:
• **Parr, Michael
Bridgend, CF31 1BE (GB)**
• **Minett, Simon
Bridgend, CF31 1BE (GB)**
• **Amin, Amin
Cardiff, CF243AA (GB)**
• **Petri, Ioan
Cardiff, CF24 3AA (GB)**
• **Wantock, Tomas
Bridgend, CF31 1BE (GB)**
• **Mendis, Charith
Bridgend, CF31 1BE (GB)**

(74) Representative: **Cavill, Ross David
Cavill IP
Greenfields
Pentre Lane
Llantarnam
Cwmbran, Torfaen NP44 7AR (GB)**

(54) **LOCAL ENERGY SYSTEM**

(57)  Disclosed is a localised energy generation and distribution microgrid network 100 suitable for supplying local energy needs, comprising one or more network electricity generating components 110, 112, 114 for generating local electricity, and comprising an electrical storage component 140 for storing the local electricity, each of said components in use transmitting and/or receiving direct current (DC) local electricity, the microgrid network further comprising a controller 120 in two way data communication with said components and operable to: a) selectively direct the flow of the local DC electricity from the or each local electricity generating component 110,112,114 to the electrical storage component 140, and/or to meet the local energy needs, and b) selectively direct the flow of the local electricity out of the storage component 140 to meet said local energy needs, said controller 120 being operable to perform said selective direction according to the current state of the network components, historic data and periodic forecasts of local energy demand and local electricity generating capacity. The network may comprise additional components in the form of a heater 180 and a thermal storage component 190, and / or a chemical energy generator such as a hydrogen gas generator 130 and a chemical energy storage component such as a gas storage component 132, as well as an inverter 122 for converting the local DC electricity into local AC electricity to supply local energy needs. Forecasting and optimisation routines are used to aid the operation of the microgrid, based on predefined priorities and operational constraints.

EP 4 765 543 A1

**Fig 1**

100

110

180

190

150

120

130

122

50

132

140

114

102

102

E

G

D

60

## Description

<u>Field of the invention</u>

This invention relates to a localised energy network whereby the energy needs of a location, such as a local community, are met, or substantially met, by a local energy generation and distribution network, referred to herein as a microgrid, supplemented if needed by a larger grid network. The invention extends to a computerised control system for operating the localised energy network, the control system being referred to herein as a local energy operating system (LEOS).

<u>Background</u>

National energy supply, particularly electricity supply, is delivered to consumers through a highly complex, geographically extensive network, with high transmission voltages generated by centralised power stations dispatching power in response to predictable aggregated demand. The power is stepped down in voltage by distribution networks to finally arrive at a residential voltage. With the growth of decentralised and fluctuating electricity generation for example, large solar photovoltaic arrays (solar farms) or wind farms, network operators, in the UK and elsewhere are struggling to manage the demand for requests for connections to the grid. Furthermore, the same network operators are struggling to manage the massive rise in stochastic power output from the renewable sources that are already connected. Part of the reason is that the electricity network was developed in the 20th century for mostly fossil fuelbased generators. It was not designed nor intended to be used by renewable electricity systems.

The increase in solar electricity from solar farms, and other solar sources such as small rooftop solar photovoltaic (PV) systems has resulted in grid operators struggling to cope with the electrical input on very sunny days. Other forms of renewable electricity generation, such as wind turbines or hydro-turbines, experience similar problems both in terms of a lack of a grid connection and their impact on power networks. Overall, the electrical national grid system is not keeping pace with the need for new connections.

National gas supply is still fragmented in the UK. Many rural areas have no mains gas, and that situation is unlikely to change now that decarbonisation is an ambition for Governments. Supplementing or replacing fossil gas with a non-carbon gas such as hydrogen is possible. However, the production of hydrogen from renewables such as wind and PV is underdeveloped , along with hydrogen storage infrastructure.

In many climates varying weather conditions cause significant variation in energy consumption, in particular for domestic households. For example, it is not uncommon for northern European domestic households, including the UK to consume relatively little energy in the 6 months of late spring, summer and early autumn, but then consume 4 or more times that energy in the other 6 months of the year. For example, for additional heating. This variance can be problematic for energy suppliers, particularly if the weather is much colder than expected. Swings in weather patterns away from the norm are becoming much more common as the impact of climate change increases. These variations cause significant strain on the energy supply grid.

Fears about the security of supply of energy (gas and oil supplies in particular) have historically increased prices of all energy, sometimes without merit.

The impact on energy consumers of the above-mentioned observations is a significant fluctuation of energy prices.

Attempts to address the above matters have been made. For example, domestic production of electricity through roof-mounted PV panels, or other small scale generation, for example wind turbines, have been used to supply one or a few households, with, increasingly, battery storage of, typically, 4-20kWh. Domestic solar charge controllers are available to control such a system. However, such systems cannot cope with tens of kW, or tens of users, and so they are limited to small scale electrical production. Domestic-scale "off-grid" systems are also prohibitively expensive for all but the most wealthy individual households, are constrained by the limited space available in a typical household, and struggle to provide year-round resilient supply.

<u>Summary of the invention</u>

The inventors have addressed the above mentioned problems and devised a microgrid localised energy generation and distribution network whereby the energy needs of a location, such as a local community, and larger consumers contracted to accept future energy (offtake), are met, or substantially met, by a local energy generation and distribution microgrid network, supplemented if needed by a larger grid network. Such a microgrid network provides an adaptable and efficient energy supply, which is, at least largely, independent of a national grid network, thereby affording more predictable energy costs and security of supply. Herein, the localised microgrid network described is based on so called renewable energy generation technology deployed on land in the locality providing power generation of at least 50kW at any given time, for a few, or tens or hundreds of users.

According to one aspect the invention provides a localised energy generation and distribution microgrid network suitable for supplying local energy needs, comprising one or more network electricity generating components for generating local electricity, and comprising an electrical storage component for storing the local electricity, said components being connected using direct current (DC) and arranged to supply said local energy needs, the microgrid network further comprising a controller in two way data communication with said components and operable to:

a) selectively direct the flow of the local DC electricity from the or each local electricity generating component to the electrical storage component, and/or to meet the local energy needs, and

b) selectively direct the flow of the local electricity out of the storage component to meet said local energy needs,

said controller being operable to perform said selective direction according to the present state of the network components, historic data and periodic forecasts of local energy demand and local electricity generating capacity. The invention extends to a computerised control system for operating the localised energy network and software operable in such a system, as well as to further refinements all defined by the claims herein.

Brief description of the drawings

The invention will be better understood by way of the non-limiting examples described below, and with reference to the drawings, wherein:

Figure 1 shows a schematic representation of a microgrid localised energy generation and distribution network; and

Figure 2 shows a schematic of a control system for controlling the components of the microgrid network of Figure 1.

Network

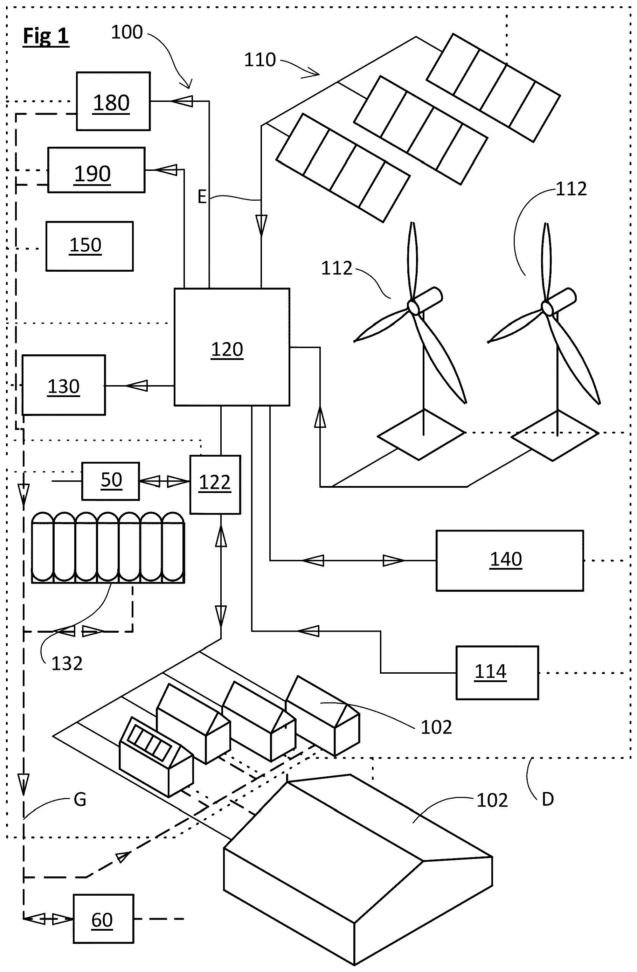

The microgrid network shown in Figure 1 shows a schematic representation of a localised energy generation and distribution network 100 for a community 102. The microgrid 100 is a localised and self-contained energy generation and supply network operable independently from the main power grid (essentially off-grid) or operable with the main power grid (essentially on-grid). It consists of distributed energy generation, and energy storage components described in more detail below, providing the energy needs of local community consumers and/or exporting energy out of, or importing into the microgrid, including for the provision of grid services such as voltage compensation, flexibility, frequency or demand response. That microgrid is integrated and controlled by software and data communication referred to herein as LEOS. In the drawing, various components are illustrated and further described below, interconnected by one or more of:-

electrical power conductors E illustrated by solid lines, in use having power propagating in the direction of the arrow or arrows shown;

gas conduits G illustrated by long chain dotted lines, in use carrying gas or liquids intended for use in heating, or for use in a vehicle or the like, or for in-situ electricity generation via a fuel cell, or for combined heat, power, and/or cooling applications (cogeneration or trigeneration) the gas/liquids being conducted in the direction of the arrow or arrows shown; and

data and control paths D illustrated by short chain dotted lines, in use providing two-way data and control communication to the various components of the network. Whilst a physical electrically conductive line is illustrated (e.g. Ethernet standard) it will be understood that other modes of communication are possible, for example RF or optical fibre communication could be used as an alternative, or in any combination using secure communication protocols interoperable with various system components (e.g. IEEE 802.11x using TCP/IP protocols).

In the network of Figure 1, local electricity generators are provided, in this example in the form of solar photovoltaic (PV) panels 110, wind turbines 112, and other generators 114, which for example could take the form of water flow powered generators, fuel cells, anaerobic digesters, bio-diesel or waste gas internal combustion engine driven electrical generators or other so called renewable energy generator devices, however, preferred are non-$CO_2$ emitting energy generation technologies. The path of the resultant local electrical energy produced by these generators is controlled by a power controller 120, which is under the command of the LEOS local energy operating system. The local electricity will be DC from the PV panels, and converted to DC (e.g. rectified 3-phase AC) from rotating machinery generators such as wind turbines, so that the control of electrical flow control can be performed solely as DC, if needed brought to a consistent DC voltage by means of DC-DC converters, such as those sold by Siemens under the acronym DCP (direct current power converter). Supply to the community including domestic and non-domestic properties is, in this example, produced as a more conventional AC supply compatible with existing building wiring systems and appliances via inverter 122, for example 240V AC nominal. In an alternative embodiment, DC supply to compatible building wiring systems, for example powering LED lighting and appliances such as computers, is delivered directly from the microgrid DC bus via power converters and protective devices, avoiding AC conversion losses.

The controller 120 is capable of feeding the local community 102 with energy, which may include offtake consumers. Herein the term 'community' is intended to encompass multiple domestic dwellings as well as non-domestic commercial premises and/or small factories and businesses and/or public sector premises such as schools or healthcare facilities, typically found in such communities. So the scale of the network is in the order of about 50kW to 10MW peak power consumption.

The locally generated electricity, in this example can be supplemented by a national grid supply 50 in times of shortfall, or that local electricity can be exported to the grid in times of excess or high grid service prices via the inverter 122. The locally generated electricity can also be stored in a battery system 140 for later use, and/or used to heat an insulated heat storage cylinder 180, and/or used to power an air/water/ground-source heat pump 190, which in turn both utilise the fluid network G to heat or cool the community,. As well as being fed directly to consumers in the community 102, or stored, the locally generated electricity may also be used to produce chemical potential energy at generator 130, herein referred to as chemical energy, in this example by feeding the electricity into an electrolyser 130 to produce chemical energy in the form of hydrogen, which in turn may be stored in pressurised storage tanks 132, and/or pumped directly to the community 102 for their consumption, for example for domestic or industrial heating, cooking, or for hydrogen powered vehicles. That hydrogen gas consumption can be supplemented by mains gas at a switch-over valve 60 in times of shortfall or may in the future be exported to the mains gas system in a prescribed way in times of excess electrical/hydrogen generation. In this example the valve 60 includes a blending device, in use operable to blend 20% hydrogen with the mains gas (primarily methane in the UK) if there is an existing mains gas supply, to feed to the community, and/or to feed back the mains gas supply, if permitted. Where there is no mains gas supply hydrogen can be fed directly to the community or where hydrogen only mains gas is supplied, then no blending will be needed.

The above mentioned microgrid network 100 is considered to be novel in particular by virtue of its whole-community integration into a so-called Smart Local Energy System (SLES) of both domestic and non-domestic premises using multiple energy vectors, its LEOS controlled interconnectivity for optimal system positioning over timescales of days, months and years, and the use of DC across the network up to the inverter 122. That whole-system integration and interconnectivity in turn provides significant technical benefits, in particular the network can be controlled over multiple timescales ranging from millisecond real-time control to positioning over years, so its overall efficiency and effectiveness in meeting community goals can be readily optimised. Part of that optimisation includes machine learning and artificial intelligence algorithms run on a computer 150, and influencing the operation of the controller 120, described in more detail below.

Control

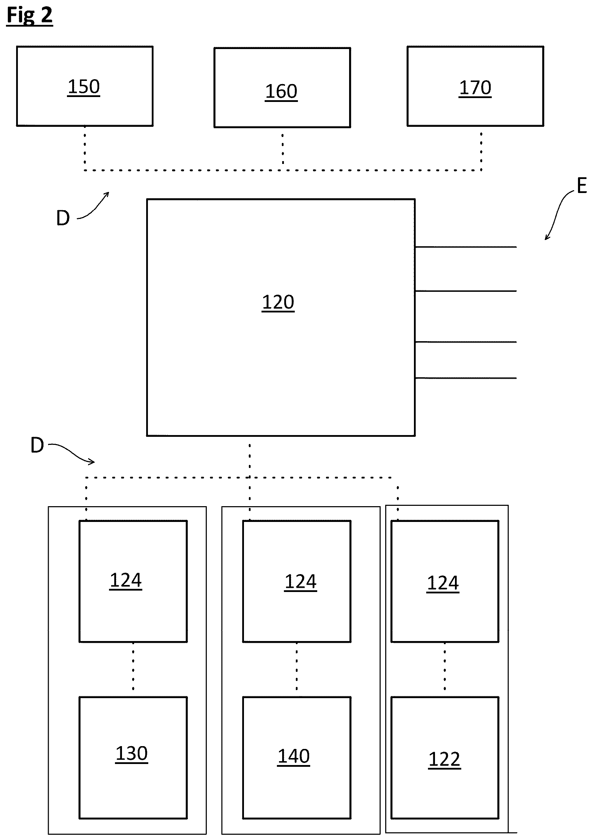

With additional reference to Figure 2, the heart of the network described above is the controller 120, which in this case is a supervisory control and data acquisition (SCADA) system, which is part of the LEOS. The SCADA is a real time controller operable to monitor the components of the microgrid network 100, controlling them and analysing component performance i.e. the performance of the electricity generating components 110, 112 and 114, the efficiency of the battery 140, the efficiency of the heat store 180, the efficiency of the heat pump 190 and electrolyser 130 and the state of charge of battery 140. The SCADA system controls the switching of electricity via programmable logic controllers (PLCs) 124 and active or passive control circuits located either at the controller 140, or (as shown) at the component to be controlled. In this case, just 3 examples of the components to be controlled are shownthe electrolyser 130, the battery 140 and the inverter 122, although all the components will require some level of control and monitoring. In addition, the SCADA is informed by numerous internal inputs from the microgrid network and from external sources. For internal inputs the components of the local network 100 are monitored via the data link D. Thus, electrical and gas demand from consumers in the community is monitored (e.g. via existing so-called smart meters) so demand can be met. State of charge of the battery 140 and temperature of the thermal load 180 is monitored, immediate capacity of the electrical generating devices is monitored. An attempt to balance inputs and outputs is made, if necessary, using battery 140 capacity, gas from store 132 and heat from thermal store 180 to make up any shortfall, and importing electricity and gas, usually as a last resort.

Figure 2 shows the additional computer 150, which as mentioned above is used to influence the SCADA controller 140 using algorithms which implement machine learning and artificial intelligence, or some other algorithm which improves over time in response to feedback, such as a genetic algorithm. In addition, the SCADA can be interfaced with other local energy generation and distribution networks, via interface 160, whereby data and/or model parameters can be shared with those other networks, to enhance the learning of the local algorithms running on computer 150. It should be noted that the computer 150 is shown schematically as part of the microgrid 100, whereas, and in practice it is likely that the computer 150 will be part of a LAN, or WAN or a dispersed network of computers which are cooperatively interconnected and run different software, and/or host data which together are employed by the controller 120. So the term computer herein is intended to encompass a single computer optionally physically integrated with the controller, or a larger network of computers in data communication and the term software herein is intended to encompass RAM software, embedded software, routines, algorithms, and the like, operating in, on or with the or each computer, all part of the LEOS. Where the network 100 is connected to a grid system, a grid system interface 170 can be provided also, for monitoring and controlling the import and/or export of energy, for example according to excess demand on the local network, or external triggers such as high export, or low/negative import tariffs.

The primary SCADA control energy model is:-

Zero = $P+W+A \pm B-E \pm I \pm G$

Where:

P is the energy from solar PV panels 110;

W is the energy from wind turbines 112;

A is the energy from other electricity generators 114;

B is the energy from (positive) or energy into (negative) the battery 140;

E is the energy into the chemical energy generator 130, in this case the electrolyser 130, thermal store 180, or heat pump 190;

I is the energy into the inverter 122 (usually negative, but potentially positive where the community includes electrical generating means such solar PV roof mounted panels) ; and

G is energy into or out of the national grid connection 50 & 60.

Expressed another way - summing the flows of energy into and out of the system must always lead to zero, or energy must be imported or exported.

The strategic control model is the priorities given to each of the energies mentioned above, which can be predefined and ranked. Examples of the priorities are:

1. Maximise electrolyser 130 utilisation (maximises decarbonisation where hydrogen replaces or supplements other gas supplies, also likely a priority when gas prices are high so reduces community heating costs and can build resilience through gas storage), so +E is given priority;

2. Maximise battery 140 state of charge (provides resilient independent energy supply and helps with priority 1 and 3), so +B is given priority;

3. Maximise local energy consumption (lower consumer costs by substituting grid imports), so +I and +E are given priority, their ratio depending on the relative prices of grid electricity and gas;

4. Maximise energy sales to grid (increased return on investment) then +G is given priority;

5. Maximise energy resilience by keeping battery and gas reserves to a predefined minimum, then +E and +B are given priority until that priority is met.

Of course it is possible to change priorities based on external influences, for example option 4 may be given priority when the spot price for energy is high, whereas option 3 might be given priority when demand is highest in the community, and spot energy prices are not so high. Also, a hierarchy of priorities can be followed and defined as goals, for example: maintain state of charge of battery at 50%, or maximise electrolyser usage or sell maximum electricity to grid for the next 30 minutes when prices are above a predefined value. These priorities can be selected via a user interface (not shown, physically co-located with the controller or on securely connected remote displays) or pre-programmed.

The SCADA controller 120 can control the network broadly according to the above-mentioned energy balancing model as well as the strategic control priorities. To optimise that strategic control, input from the computer 150 will optimise the microgrid network's performance. In other words the SCADA can be given help to optimise its control over longer timescales and with more data-driven insight, resulting in, for example:-

a) Minimising generation curtailment (i.e. minimising excessive generation versus demand and thereby reducing wasting energy that could have been sold or used);

b) Minimising grid import (i.e. forecasting excessive demand versus expected generation, thereby reducing expensive energy that could have been substituted by cheaper local generation);

c) Ensuring local components of the microgrid are held within their optimal operating envelopes, for maximising lifetime of the components and minimising their maintenance / replacement costs e.g. keeping batteries at a healthy state of charge at all times, avoiding deep discharge or overcharge degradation;

d) Energy generation and consumption forecasting: this can be achieved by monitoring current weather for temperature, sunshine hours, and/or wind conditions;

e) Historic data analysis, relating to past community consumption, for example cross referenced with historic weather data, time of year data, day of the week data and/or time of day data;

f) Balancing the battery's 140 state of charge 140 with electrolyser use, and use of gas storage 132, to provide a ratio of electricity and gas commensurate with the community's potential demand (e.g. forecast from a and/or b);

g) As mentioned above, monitoring market spot prices for energy (electricity, and if permitted, gas), so that those energies can be fed into their respective grids to increase revenue, according to predefined price thresholds;

h) Iterative determining of variance between forecast and actual generating capacity and/or forecast energy demand and actual demand, to model statistical confidence levels and future margins of error.

Having defined priorities, and forecasting based on the above examples, the computer 150 can instruct the SCADA to achieve an objective for the energy balance mentioned above, typically updated in 30 or 60 minute intervals.

Where bad data is supplied by computer 150, or the data is missing, then the SCADA can safely carry on without the optimisation mentioned above. That risk can be mitigated by using two computers 150 essentially working in parallel to enable built in redundancy. A UPS can be employed also to reduce the risk of losing control. In the event of a compete local system failure, local consumers will still be able to access power through the existing grid connection.

Operational data is generated by running operational routines on computer 150, or other computers associated with computer 150. In a typical operational routine, the computer 150 will:-

i) Read the status of current microgrid components sent from the controller for the previous time period (usually set to half-hour or hour periods) which includes generation capacity, storage capacity and energy demand,

ii) Compare that current status to previous status forecasts (i.e. historic data), and update a predictive model, optionally incorporating data or model parameters drawn from other locations (e.g. from similar microgrids),

iii) Forecast local energy (electricity / gas) demand from the community, local offtakes and grid export / services, based on inferences from meters and / or market pricing signals,

iv) Forecast local electricity / gas generation (based on inferences from weather / geographic data driving renewable generation, and any previously scheduled dispatchable generation, e.g. for offtakes),

v) Set a target status for controller 120 to achieve within the coming time period (e.g. the next half-hour / hour period), based on the generation / demand forecasts, to deliver the predefined operational priority e.g. 1-5 defined above, for example influenced by the optimisations a) to e) defined above also.

For the above routines, the controller 120 and subordinate controllers 124 will, then:-

vi) Receive the target status for next half-hour / hour from forecasting / scheduling software

vii) Calculate a trajectory (how to get from current status to the target status, or closer to the target status, efficiently and safely)

viii) Send instructions to the controlled components to adjust their parameters to be aligned with the calculated trajectory,

ix) Check safety and objective progress at a predefined subperiod, and adjust on-the-fly as necessary, and

x) Record components' telemetry and overall system status, package up that data as a data file or collection of files and send that file or collection of files, in this instance every period, to the computer 150 for use by the operational routine.

The use of software, separate from a controller 120, to achieve the above allows more data and processing power to be used for forecasting and objective-setting than may be available locally ("locally" meaning either in the control system's local processor / memory, and / or in the local area) - allowing for longer time horizons, better predictive accuracy and better objective-setting.

In order to augment the operational control algorithms mentioned above, a predictive model may be prepared, using the methodology described below, focusing for example on multiple objectives of grid independence, cost efficiency and low carbon emissions. Such a predictive model can be used to generate periodic forecasts of local energy demand and local electricity generating capacity. Initially the predictive model is seeded with cleaned historic data relating to the community 102 including the variables of, for example: energy consumption and weather data, collected over a continuous one-year period, including aggregated electricity consumption at a low-voltage substation (30-minute resolution) and natural gas consumption. Additionally, for the seed data, air temperature, solar irradiation, and wind speed data (5-minute resolution) may be obtained from an automatic weather station near the community. Such a predictive model is intended to periodically predict for the full day-ahead (or longer, as may be required to optimise overall local energy system performance) key variables, such as: community electricity demand, community gas demand, wind speed, air temperature, and solar irradiation.

As well as predicting community energy demand, these variables are used to estimate any real-time power output obtainable from electricity generating assets (for example, solar PV and wind turbine) to be employed in the microgrid local energy system 100. The generation, energy storage and energy consumers, are herein categorised as P,W,A,B,E,I, and G as defined above. From a predictive model, optimal relative sizing and configuration of system components P,W,A,B,E,I, and G can be determined, and the anticipated demand and generation patterns can be estimated.

Machine Learning (ML) techniques are increasingly employed for predictive models. An illustration of the application of ML techniques to the above local energy system follows below. Various ML algorithms were tested using collected community data as a verification. Artificial Neural Network (ANN), Random Forest (RF), Long short-term memory (LSTM) and Recurrent Neural Network (RNN) models were used and compared for accuracy. For this application, an ANN model produced the best results with reasonably short processing time. The ANN model was used to: accept the cleaned historic data; learn the patterns of energy consumption based on weather patterns; predict the energy that can be generated based on the weather patterns and based on the energy generation assets employed; be tested and refined using more cleaned historic data; and predict future energy demand and energy generation, and thereby influence the control algorithms mentioned above, such that grid independence, low costs and low $CO_2$ generation are prioritised.

The predictive model includes a number of parameters (determinants) i.e.:

a) Energy demand patterns including the characteristics of end-users (residential or commercial) and their daily and seasonal variability;

b) Resource availability including the diversity and accessibility of local renewable energy resources, which inform the selection of system components;

c) Present weather conditions used for forecasting and controlling energy system performance;

d) Network flexibility, enabled through demand- and supply-side technologies such as electric vehicles (EVs), battery and heat storage, H2 gas storage and other energy stores;

e) Network reliability including the capacity of the system to provide a stable and secure energy supply;

f) Economic incentives including the impact of energy prices on system design and the affordability of supply;

g) System efficiency and stakeholder benefits Encompassing techno-economic and environmental factors.

In addition to the predictive model, an optimisation framework is also required, using the outputs of a predictive model to achieve objectives. The optimisation problem, given inputs from a predictive model, may be formulated as, for example: to maximise renewable energy utilisation while minimising grid dependence and operational costs. Battery storage and loads (for example, an electrolyser) may then be controlled through decision variables that (i) minimised absolute net grid exchange, (ii) maximised PV and wind electrical self-consumption, and (iii) reduced environmental impacts (minimised $CO_2$).

An example of the optimisation framework functionality is:-

The framework utilises the predictive model to determine a day-ahead scheduling horizon with a half-hourly resolution. At each time interval (t): The framework obtains the initial state of charge (SOC) of the battery and hydrogen storage or offtake system status at a given time (t=0); retrieves the day-ahead forecasts from the predictive model (t+1,. . . ,t+48) for renewable (PV and wind turbine) generation and community load demand; performing an optimisation routine for each of the a day-ahead time intervals to determine the battery and electrolyser scheduling (t+1,. . . ,t+48); and finally, the framework identifies the optimal decision variables (power grid, battery load, and electrolyser load) and dispatches the first control signals to the computer 150 (t+1), for controlling the microgrid 100, then shifts the horizon forward.

The optimisation framework is used to manage the flow of energy within the microgrid according to the priorities mentioned above i.e. 1) Maximise electrolyser 130 utilisation, 2) Maximise battery 140 state of charge, 3) Maximise local energy consumption, 4) Maximise energy sales to grid, 5) Maximise energy resilience, or a combination of those priorities, depending on external factors such as energy export spot prices.

The optimisation model has three key objectives :

1) Grid independence where total grid interactions (TGI) are minimised and quantified as

$$\text{TGI} = \sum\nolimits_{t=1}^{n} | ERES(t) + EBT,dc(t) - EBT,ch(t) - ELD(t) - EEL(t) - ECT(t) | \qquad (1)$$

2) Economy where the electricity operation cost (*EOC*) represents the economic daily performance of the energy system and is quantified as-

$$\text{EOC} = C_{GD,im} \cdot \sum_{t=1}^{n} E_{GD,im}(t) \qquad (2)$$

where $E_{GD,im}$ is the electricity imported from the grid (kWh) and $C_{GD,im}$ is the purchasing tariff (£/kWh)

3) Environment performance where the carbon emissions (*CO2E*) are assessed, and quantified as -

$$\text{CO2E} = \varepsilon \cdot \sum_{t=1}^{n} EGD,im(t)$$

where $E_{GD,im}$ is the electricity imported from the grid (kWh) and $\varepsilon$ is the carbon emission factor (kg/kWh)

Operation of the microgrid was limited by an energy balance constraint and constraints of the components used within the microgrid. As noted above the power balance of the microgrid system has to be zero or energy will need to be imported from or exported to the grid. Excess renewable energy can be transferred into stored energy via the electrolyser, although since that is internal energy transfer, it does not affect the energy balance.

The energy balance constraint, for example for $E_{gm,im}$ to be zero, is quantified as-

$$EP_{PV}(t) + EP_{WT}(t) + EP_{B,d}(t) + EP_{GD,im}(t) = EP_{LD}(t) + EP_{EL}(t) + EP_{BT,ch}(t) + EP_{CT}(t) \qquad (4)$$

where $EP_{PV}$ and $EP_{WT}$ are the electrical power produced by the solar PV and wind turbine. $EP_{BT,c}$ and $EP_{BT,ch}$ are the discharging and charging electrical power of the battery, respectively. $EP_{LD}$ is the total power load of the community. $E_{GD,m}$ is the electrical power imported from the grid. $EP_{EL}$ and $EP_{CT}$ are the electrolyser operation power and the curtailed power.

Further constraints include the limits of battery storage status $SOC_{BT}$ and hydrogen storage status $SOC_{H2}$, defined as-

$$SOCBT\ min \leq SOCBT(t) \leq SOCBT\ max \text{ and } OCH2min \leq SOCH2(t) \leq SOCH2max \qquad (5)$$

where the min and max values represent operational limits, for example 20 to100% charge for the battery (min to max) and 10% to 95% storage capacity for $H_2$, for safety, unless there is a continuous $H_2$ offtake, for example to a large gas distribution network or through regular periodic exporting of $H_2$ through a commercial dispatch arrangement.

Another constraint is the minimum and maximum loads for the electrolyser $EP_{EL}$, and battery charging $EP_{BT,ch}$, and discharging $EP_{BTdc}$, all defined as-

$$EP_{EL}min \leq EP_{EL}(t) \leq EP_{EL}max \qquad (6)$$

$$EP_{B,c}min \leq EP_{BT,dc}(t) \leq EP_{BT,dc}max \qquad (7)$$

$$EP_{B,h}\ min \leq EPBT,ch(t) \leq EP_{BT,ch}max \qquad (8)$$

Where the min and max values will be defined by manufacturers specifications.

Grid safety constraints are included to ensure system stability, such as the export protection and overloading power, defined as:

$$-1 * EP_{\text{GD,export}}\, max \leq EP_{\text{GD,im}}\,(t) \leq EP_{\text{GD,import}}\, max \tag{9}$$

**Where the** $EP_{\text{GD,import}}\, max$ and $EP_{\text{GD,export}}\, max$ values will be defined based on local feeder specifications.

Other safety constraints include the curtailment of surplus curtailment renewable generation in case of full hydrogen storage and no commercial dispatch, defined as:

$$EP_{CT}(t) = [EP_{W\,T}(t) + EP_{PV}(t)] - [EP_{LD}(t) + EP_{EL}(t) + EP_{BT,ch}(t) + EP_{GD,export}max(t)] \tag{10}$$

*Where the* $EP_{\text{GC, export}}$ max is the maximum power that can be exported to the grid

Other constraints will be the maximum gas draw rates for stored $H_2$, the maximum and minimum power resulting from machine controllers operating maximum power point tracking (mppt) control, i..e min and max power available from the solar pv and wind turbine assets, for given weather conditions.

The optimisation framework was developed in Python using Platypus for evolutionary algorithms and GEKKO for linear programming. Simulations were executed on a desktop computer (Intel Core i7 3.40 GHz, 16 GB RAM) to ensure consistent computational conditions, with fixed population sizes for evolutionary methods to maintain comparability. Three optimisation methods (MILP, PSO, NSGA-II) were evaluated across the four seasonal scenarios. NSGA demonstrated competitive results but with longer computation times (9-12 minutes), making it less suitable for discrete variable optimisation problems. PSO achieved moderate performance with a 3-4 minute computation time but showed higher variability in solutions. Conversely, MILP delivered optimal solutions with the fastest convergence (<0.2 minutes), making it the preferred method for the proposed optimisation framework.

The performance of the local multi-energy system was benchmarked using an initial annual analysis, where the system was only controlled across current conditions. This scenario achieved 92% reduction in electricity purchases, 76.7% cost savings, 96% self-consumption of locally generated renewable energy, and a 20% reduction in total energy carbon emissions. Additionally, 70 tonnes of hydrogen were produced per year, with 4 tonnes used in the domestic gas network.

The modelling showed that the implementation of the MILP-based day-ahead optimisation framework provides more efficient and optimal solutions among the four seasonal scenarios, as follows:

1) Winter (High electricity demand and low production): The framework provided 100% self-consumption, with 98.9% self-sufficiency and only 2.5% grid imports. This resulted in 84% cost savings and 22% carbon emission reduction. The consistent energy demand was effectively managed by prioritising renewable energy distribution across the community via battery and electrolyser energy.

2) Summer (Lower electricity demand and average production): The system maintained 99.8% self-sufficiency with only 1.2% grid imports. Cost savings reached around 80%, while carbon emissions were reduced by 45%. The extended daylight hours and warm temperatures lessened electricity and gas demand, effectively increasing potential savings.

3) Spring (Low electricity demand and high production): The system achieved full 100% self-consumption, self-sufficiency, and grid independence. These provided 85% cost savings, with 23% carbon emission reduction. However, around 1.5% of the total electricity production was curtailed to prevent grid overload. This season highlighted the importance of efficient energy storage and hydrogen production.

4) Autumn (Average electricity demand and average production): Balanced demand and generation conditions enabled 99.8% self-sufficiency with 0.8% grid imports, achieving 83% cost savings and 32% carbon emission reductions. The stable energy profile allowed consistent renewable energy utilisation without significant curtailment.

The integration of the hydrogen production system provides renewable energy self-consumption across all scenarios. In simulations, using historic data, the electrolyser effectively absorbed surplus renewable energy, producing between 900 kg/week in winter and up to 1800 kg/week in spring, producing around 80 tonnes of green hydrogen annually, with approximately 6 tonnes injected into the natural gas network. Hydrogen production was notably variable across the seasons, influenced by the availability of renewable energy. Production peaked in spring (1800 kg/week) due to high solar and wind availability, while it was lowest in winter (900 kg/week), reflecting reduced renewable generation. At the 20% blending ratio, the system injected between 35-180 kg into the natural gas network, reducing community gas demand by 7.2%. A 2-tonne hydrogen storage tank maintained over 90% capacity throughout the year, with around 90% of the produced hydrogen available for commercial use.

Notably, the electrolyser consistently absorbed a higher share of surplus renewable electricity compared to the battery. This is due to persistent wind power generation at the pilot site that mitigates production fluctuations and limits the discharging of the battery. The electrolyser's ability to continuously convert excess electricity into hydrogen offers a flexible and scalable energy storage method. This integration demonstrated the dual benefits of hydrogen as both an energy storage medium and a low-carbon fuel.

The optimisation framework is implemented as a control method routine integrated into a real-time operational framework, managing energy flows across the low-voltage network over a day-ahead time horizon. In this instance this means controlling battery storage, electrolyser operation, use of the PV output, and use of the wind turbine output for optimum functionality against the objectives mentioned above, and the priorities mentioned above. The routine showed a significant improvement over conventional control approaches that simply react to changes in demand. It will be appreciated that the numerous features described above and/or illustrated herein are set forth by way of example and are not intended to limit the scope of the invention.

Numerous alternatives, variations, modifications, additions, and omissions, to those examples will be apparent to a person skilled in the relevant art. For example, as mentioned above, the computer 150 is, in the embodiment mentioned above, local to the microgrid network, although in practice it could be located anywhere and communicate, for example via a suitable protocol over the internet, or any combination of computers could be used. An inverter 122 has been described and illustrated in the embodiment, for supplying consumers, but, especially in the future, if consumers of electricity could switch to DC consumption, then the electricity supply could be AC and/or DC, which may negate the need for the inverter 122 if DC only is provided and consumed. The Heat store 180, heat pump 190, hydrogen generator 130 and hydrogen storage 132 are advantageous for adaptable energy supply and storage, although they are not essential to the invention. Whilst blending of natural gas and hydrogen will allow existing gas appliances to be used largely without alteration, a higher percentage of hydrogen, or 100% hydrogen could be used where the consumer's appliances allow that, for example mixed with a suitable amount of Mercaptan to allow the gas to be detected by the consumer. The microgrid network described and illustrated is particularly useful because it is adaptable to changing short term (for example a few days) energy demand. Other components which aid adaptability could be incorporated into the network. For example, the gas storage 132, could include or be replaced by storage in a gas distribution network, which is essentially the distribution network for gas to be used by the community. For example, gas cylinders which can be expanded in volume could be used as part of the gas distribution network. Also the heat store may be expanded or replaced by heat stored in a local heat distribution network, thereby storing heat energy , or additional heat energy in the heat transit parts of the distribution network. For example, the heat storage could be an insulated dense mass such as a sand heat store which can store and give up heat on demand via a water circuit passing through the sand. Supplementary electrical storage, in addition to the main storage 140 may be provided, for example smaller batteries or capacitance devices such as supercapacitors (e.g. electric double-layer capacitance) incorporated with the solar PV panels 110 or wind turbines 112, may be used, for example to smooth any short term peaks or troughs in renewable generation, or other electrical generation, improving overall control. Moreover, although the production of hydrogen alone has been described above, it is just one example of local electricity conversion into stored (potential) chemical energy, local electricity could also be used to make other chemical energy such as gaseous or liquid fuels, to be used locally and/or exported. For example: synthetic fuels produced from hydrogen and carbon dioxide, or through conversion of biomass or waste, or using non-carbon feedstocks, such as ammonia. Energy can be released from fuels as needed, for example as heat through combustion (for example, in a boiler or internal combustion engine) or as electricity (for example, in a generator or fuel cell), or as combined heat and power. In addition, the microgrid could incorporate additional assets, for example in the form of electrical generation and storage installed in individual community buildings (domestic and non-domestic) connected to either to the microgrid or the grid network for example at low voltage or 11kV, and where the control software may control these addition assets also under the control of the grid system interface 170. In that case, for example, in-home/building batteries could be collectively discharged to the national grid network at forecasted peaks in demand in a so-called "Virtual Power Plant" model - or collectively charged when electricity is low priced, according to a so-called "Time of use" grid tariff, or using local power from the microgrid.

Moreover, the implementation of the invention is described in the context of a small network or microgrid which is likely to have some tens or hundreds of electricity consumers and which also has solar and wind generators and battery and electrolyser storage systems operating generally with dc or domestic voltage (DM) (240volt ac), or low voltage (LV) (3 phase 415 volt ac). However, electricity distribution networks have other voltage layers. i.e. medium voltage (MV) (typically 11kV) and high voltage (HV) (typically 33kV). For simplicity and to aid understanding, the implementation of the invention has been described as based on dc and a DV and LV voltage network connected to/fed by a single LV/MV substation. However, the invention could also work on an MV network of multiple feeders powered by a single MV/HV substation (also called a primary substation). Each MV feeder would have a mix of renewables, battery storage and electrolysers, controlled in the same fashion as in the LV implementation. Likewise the forecasting would be the same since the same weather will be encountered in the area covered by the primary substation. Such an implementation could be considered an autonomous network since it will automatically self-regulate. In that case the microgrid would be a series of communities and the control routine could service those series of communities.

In particular, for the ML aspects of this innovation, certain information is collected as described above, for example historic energy demand of the community served by the microgrid, and weather forecasts (e.g. external air temperature, wind speed, and solar irradiance) and used in a predictive manner. However, in a refinement that information may include in-building (domestic or non-domestic) environmental sensor data (e.g. internal temperature, humidity, CO2 levels indicative of ventilation, air quality, and anonymised building occupancy data) and local environmental data (from satellite data or sensors) specific to the community area. The information will be correlated to both renewable energy generation and local energy consumption -to inform the LEOS ML predictive/ optimisation framework.

In another refinement, measurements can be made of local in-building energy flows and grid parameters (e.g. voltage, frequency) via grid-tied inverters or other in-building / local grid electrical monitoring equipment e.g. current transformers, smart meters and then fed into the ML predictive / optimisation framework to better understand where and when energy is being used, thereby enhancing the predictive models employed.

The information generated by the aforementioned framework, may be made accessible remotely in order to monitor the performance of the hardware employed. Data access from monitoring equipment can be for example via WiFi, mobile internet, LoRa, other radio frequencies, mesh networks, physical Ethernet or optical fibre cable. The data can be processed by the LEOS ML / SCADA layers through a combination of local "edge" computation or non-local "cloud" computation or a combination of locations, for example making use of the computational resources of plural devices, for so-called federated machine learning. The environmental and in-building / local grid electrical data is useful for further training and calibration of the ML model.

Use of the LEOS ML predictive / optimisation framework, for example fed with the additional data mentioned above, as well as serving the energy needs of the community and local off-takers, can be modelled together with energy market data, and then used to engage with grid ancillary services. Thus, a more accurate assessment of the profitability of exporting (e.g. excess) energy can be made in comparison to storing that energy locally. Grid flexibility and additional community generator revenue / local consumer savings can be achieved through coordinated control of in-building battery storage / inverters alongside microgrid assets to deliver a so-called Virtual Power Plant at peak predicted local demand, flexibility / load shifting services including via Time of Use grid tariffs, voltage and frequency regulation ancillary services including synthetic inertia.

Primarily, it is envisaged that the microgrid will use DC to transmit power. However, the use of AC in some sections of the DC microgrid is envisaged also, where advantageous, for example to reduce losses in cable runs of long distances, i.e. several km, or where off-takers have large AC demand. Such an AC section does not need to be grid-synchronous (or even at the same frequency e.g. 50 Hz UK / Europe, 60Hz US) due to a DC link to the main grid.

While it is possible to use DC to power rotating machines such as motors, pumps, and compressors, where there is significant power demand from those machines, and/or they are used for long periods of time (e.g. factory machines, water pumping stations, compressors or heat pumps), then a hybrid AC and DC supply could be used which takes power from an external grid supply and can be supplemented or even replaced by DC power from the aforementioned DC microgrid. In one example, such a hybrid drive might be employed where those machines have been optimised to use AC, and may need to have variable rotational speed, the DC microgrid can be used to augment or even replace the use of AC, for example where the AC is accepted from the grid for larger loads. A variable-speed motor drive typically consists of a rectifier front end that converts the incoming grid AC supply to a regulated DC link. The DC link supplies a power electronic inverter, which synthesises a controlled AC output of variable frequency and voltage, for example in accordance with IEC 61800. Because the inverter defines its own waveform, the motor operating frequency is decoupled from the supply frequency, enabling independent control of motor speed and torque. At the DC stage between the rectifier and inverter, DC power can be added from the aforementioned microgrid, which does not flow through the (e.g. diode) rectification stage, but adds to the DC power accepted by the VF inverter, to power the motor, and reduce dependence on grid power, or reduce the need for grid power import when the DC microgrid has sufficient power available. The effect of this on the AC grid side of the rectifier is a reduction in load, with no reverse power through the rectifier (which works in one direction only, AC to DC). In this way the speed and/or torque of existing motors such as LV three phase, DM AC induction, permanent magnet synchronous (PMSM) and other motors can be conveniently controlled and supplemented with DC microgrid power when needed. Where the motor is a DC driven motor but supplied by grid AC via a rectification stage as mentioned above, then a VF inverter will not be required and may be replaced with a DC pulse width modulation (PWM) power converter stage, to supplement or replace the grid AC power requirement, again supplied by the DC microgrid on the DC side of the rectifier. A further advantage of connecting rotating machines directly to a DC bus in this way is the recovery of braking energy as DC power, versus dissipation as heat, improving efficiency.

It is envisaged that features from different embodiments may be brought together, without adding to the scope of the invention. In addition, the order of any features in the form of method steps or sequences in the description, claims and/or drawings herein is not intended to require that order of performance unless a particular order is necessary for technical reasons. Multiple features in a single claim herein may be so combined in that claim for, for example, fiscal, not technical reasons and so such combined features are not necessarily intended to form a whole inseparable technical concept. Therefore, in the claims set forth, it is intended that claim features may be exchanged between, or extracted from, claims containing other features without broadening the scope of the invention or causing a so-called intermediate generalisation.

**Claims**

1. A localised energy generation and distribution microgrid network suitable for supplying local energy needs, comprising one or more network electricity generating components for generating local electricity, and comprising one or more electrical storage components for storing the local electricity, wherein in use each of said components transmits and/or receives said local electricity as direct current (DC), the microgrid network further comprising a controller in two way data communication with said components and operable to:

    a) selectively direct the flow of the local DC electricity from the or each local electricity generating component to the or each electrical storage component, and/or to meet the local energy needs, and
    b) selectively direct the flow of the local electricity out of the or each storage component to meet said local energy needs,

said controller being operable to perform said selective direction according to operational data including the present state of the network components, historic data and periodic forecasts of local energy demand and local electricity generating capacity.

2. A network as claimed in claim 1 further comprising an additional network component in the form of at least one inverter for converting the local DC electricity into alternating current (AC) for local energy needs and/or for exporting electricity and/or for providing grid ancillary services.

3. A network as claimed in claim 1 or 2, wherein the network includes further components in the form of one or more chemical energy generating components, such as hydrogen gas generating components for converting the local electricity into chemical energy such as hydrogen gas and one or more chemical energy storage components such as gas storage components or one or more local chemical energy distribution network components such as gas distribution network components for storing the chemical energy or hydrogen gas, and the controller is further operable to:-

    c) selectively direct an amount of the locally generated or stored electricity to said the or each chemical energy generator to produce the chemical energy, and
    d) selectively direct an amount of the chemical energy generated by the chemical energy generator(s) to said chemical energy storage or to said chemical energy distribution network component(s) and/or to meet local energy needs,

the controller undertaking said selective direction in this claim, according to said operational data.

4. A network as claimed in any one of claims 1,2 or 3 wherein said controller is operable to pursue priorities which are predefined and/or influenced by said operational data, said priorities comprising one or more of: -

    i) minimising the use of local energy not generated by the microgrid network,
    ii) maximising the energy stored locally, and
    iii) maximising local energy sales, to a main grid network and/or local offtakes.

5. A network as claimed in any one of the preceding claims, wherein said components further include one or more of: at least one heat store, one or more heat distribution networks; and one or more heating components, the or each further component being operable under the control of the controller.

6. A network as claimed in any one of the preceding claims 3,4 or 5 wherein said controller is operable to pursue further priorities, said further priorities comprising one or more of: -

    iv) maximising the generation of chemical energy such as hydrogen gas at the chemical energy (hydrogen) generator component(s);
    v) maximising the reserves of stored local electricity and chemical energy such as hydrogen gas;
    vi) maximising the amount of heat stored in the heat store(s) or stored in the heat distribution network(s); and
    vii) maximising the functioning of the heating component(s).

7. A network as claimed in any one of the preceding claims, in use processing data external to the network, for example data and/or model parameters associated with one or more other localised energy generation and distribution networks and/or,

wherein peaks and troughs of the electricity generation from said generating components are smoothed or filtered by the controlled variable uptake and discharge of electricity by the or each electrical storage component or additional supplementary electrical storage, and/or

wherein said components include one or more transfer interconnections with an AC distribution grid system, and said controller is operable to export local electricity and/or local chemical energy such as hydrogen and/or local heat to said grid system, as well as being operable to import electricity and/or chemical energy and/or heat into the network from said grid system, and/or being operable to provide ancillary services to the grid system operator, such as voltage compensation, flexibility, frequency or demand response and optionally,

wherein said interconnection(s) include an AC distribution grid system power feed directly or indirectly to one or more rotating machines, and a hybrid AC and DC supply to the machine(s) allowing consumption of power by the machine(s) from both the AC grid and the DC microgrid.

8. A computerised control system for a localised energy generation and distribution microgrid network suitable for supplying local energy needs, the system being operable to monitor network components, namely network components comprising one or more electricity generating components, and one or more electrical storage components and optionally a selection of one or more components from a list consisting of: one or more heating components, one or more heat stores, one or more heat or chemical energy distribution network components, one or more chemical energy generators, such as a hydrogen gas generator, and one or more chemical energy store components, the system being further operable to selectively direct the flow of DC electricity between said components and/or control said components to pursue predefined priorities and/or priorities defined by operational data said operational data including the present state of the network components, historic data and periodic forecasts of local energy demand and local electricity generating capacity, the system optionally including a supervisory control and data acquisition unit and subordinate programmable logic controllers and/or active or passive control circuits to control said components and direct said local electricity.

9. A software operable control method, when run on a computer and/or a controller said software being operable to influence the flow of local DC electricity between components of a microgrid scaled energy network which generates local electricity and distributes that local electricity across the network, the software providing said influence according to at least the following information:- the monitored present state of the network components, historic data and periodic forecasts of local energy demand, and local electricity generating capacity,

the method optionally being further operable to export energy in the form of local electricity and/or heat and/or chemical energy from the network or to import local electricity and/or heat and/or chemical energy according to external triggers, and/or,

the method optionally being further operable to collect data and/or model parameters from or disseminate data and/or model parameters to other networks,

the method optionally further comprising a predictive model driven by at least said historic data to provide said periodic forecasts, for example refined by a machine learning algorithm such as an Artificial Neural Network algorithm.

10. A method according to claim 9, wherein the predictive model is optimised by an optimisation framework, the framework being operable under the influence of predetermined priorities including maximising renewable energy community self-consumption, and/or minimising external electricity importation, and/or wherein the optimisation framework is operable within predefined constraints, for example one or more of a substantially zero-sum internal energy balance to avoid external electricity importation, operational limits of energy generation and storage, maximum and minimum power loading of microgrid components such as an electrolyser load, battery charge and discharge rates.

11. A method as claimed in any one of the preceding claims 9 or 10, wherein said information used to influence the flow of electricity between microgrid components further includes, one or more of:- in-building environmental sensor data, for example internal temperature, humidity, $CO_2$ levels indicative of ventilation, air quality, and building occupancy data, and local environmental data for example from satellite data or sensors.

12. A network, control system or control method as claimed in any one of the preceding claims, wherein said present state of the network components includes one or more of:
the state of charge of the or each electrical storage component, the amount of heat energy in the or each heat storage or heat distribution network component, the amount of gas or chemical energy stored in the or each storage or chemical energy distribution network component, present generating capacity, rate of change of storage capacity / generating capacity.

13. A network, control system or control method as claimed in any one of the preceding claims, wherein said historic data includes data relating to one or more of: the previous states of charge of the or each electrical storage component, the previous temperatures of the or each heat storage or heat distribution network component, the previous amount of chemical energy stored, previous generating capacity, previous rate of change of storage capacity / generating capacity;
or wherein said periodic forecasts occur about every 30 minutes to about every hour.

14. A network, control system or software as claimed in any one of the preceding claims, wherein the localised energy generation and distribution microgrid network includes a national grid connection allowing importation and exportation of electricity, and wherein the connection includes one or more of a domestic, low or medium voltage output stations.

15. A network, control system or software as claimed in any one of the preceding claims, operable to command one or more of the network components to export or import energy from a grid system under the influence of energy market data, and/or wherein the network, control system or software includes monitoring equipment for monitoring the operational data and said monitoring equipment is provided with said data via a communication link including one or more of:- WiFi, mobile internet, LoRa, other radio frequencies, mesh networks, physical Ethernet or optical fibre, and wherein said data is processed or is stored locally, with so called edge computation or non-locally with so called cloud computation or a combination of local and remote computation for example making use of so called federated machine learning.

**Fig 1**

100

110

180

190

150

120

E

130

50

122

130

132

140

114

102

102

60

G

D

**Fig 2**

Europäisches
Patentamt

European
Patent Office

Office européen
des brevets

**EUROPEAN SEARCH REPORT**

Application Number

EP 25 22 2406

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/117710 A1 (VIEHWEIDER ALEXANDER [JP] ET AL) 27 April 2017 (2017-04-27) | 1,2,8,9, 11,13 | INV. H02J3/00 |
| Y | * abstract * <br> * figures 2, 4, 5, 6, 12, 15, 16A - 16H * <br> * paragraphs [0094], [0098] * <br> * paragraph [0058] - paragraph [0060] * <br> * paragraph [0068] - paragraph [0073] * <br> * paragraph [0086] - paragraph [0090] * <br> ----- | 3-7,10, 12,14,15 | H02J3/28 H02J3/38 H02J15/50 |
| Y | PARRA DAVID ET AL: "A review on the role, cost and value of hydrogen energy systems for deep decarbonisation", RENEWABLE AND SUSTAINABLE ENERGY REVIEWS, vol. 101, 1 March 2019 (2019-03-01), pages 279-294, XP085567058, ISSN: 1364-0321, DOI: 10.1016/J.RSER.2018.11.010 <br> * abstract * <br> * figures 2, 6, 8, 9 * <br> * Sections: 4, 6, 7 and 8 * <br> ----- | 3,5-7,12 | |
| Y | US 2018/287388 A1 (BATES SCOTT DAVID [US]) 4 October 2018 (2018-10-04) <br> * abstract * <br> * figure 5 * <br> * paragraphs [0030], [0078] * <br> * paragraph [0093] - paragraph [0097] * <br> * paragraph [0102] - paragraph [0106] * <br> ----- <br> -/-- | 4,5,10, 14,15 | TECHNICAL FIELDS SEARCHED (IPC) <br><br> H02J |

The present search report has been drawn up for all claims

| Place of search | Date of completion of the search | Examiner |
|---|---|---|
| Munich | 6 May 2026 | Oiring, Vinicius |

EPO FORM 1503 03.82 (P04C01)

page 1 of 3

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | R. SHYNI ET AL: "HESS-based microgrid control techniques empowered by artificial intelligence: A systematic review of grid-connected and standalone systems", JOURNAL OF ENERGY STORAGE ELSEVIER BV, NL, vol. 84, 19 February 2024 (2024-02-19), XP087504491, ISSN: 2352-152X, DOI: 10.1016/J.EST.2024.111012 [retrieved on 2024-02-19] * abstract * * figures 4, 6, 15, 18, 22 * * Sections: 2 and 5 * ----- | 1-15 | |
| A | ASGHAR EHTISHAM ET AL: "A Review of Data-Driven Smart Energy Management Systems for Distribution Networks", 2023 IEEE PES GTD INTERNATIONAL CONFERENCE AND EXPOSITION (GTD) IEEE, 22 May 2023 (2023-05-22), pages 386-397, XP034436143, DOI: 10.1109/GTD49768.2023.00100 [retrieved on 2023-09-29] * abstract * * figures 3, 4, 5 * * Section: III * ----- -/-- | 1-15 | TECHNICAL FIELDS SEARCHED (IPC) |

The present search report has been drawn up for all claims

| Place of search | Date of completion of the search | Examiner |
|---|---|---|
| Munich | 6 May 2026 | Oiring, Vinicius |

EPO FORM 1503 03.82 (P04C01)

page 2 of 3

Europäisches
Patentamt

European
Patent Office

Office européen
des brevets

# EUROPEAN SEARCH REPORT

**Application Number**

EP 25 22 2406

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHOU YIHUAN ET AL: "Online energy management optimization of hybrid energy storage microgrid with reversible solid oxide cell: A model-based study", JOURNAL OF CLEANER PRODUCTION ELSEVIER, AMSTERDAM, NL, vol. 423, 6 September 2023 (2023-09-06), XP087404359, ISSN: 0959-6526, DOI: 10.1016/J.JCLEPRO.2023.138663 [retrieved on 2023-09-06] * abstract * * figures 1, 2, 5 * * Section: 2, 3, 3.1 and 3.2 * | 1-15 | |

TECHNICAL FIELDS
SEARCHED        (IPC)

The present search report has been drawn up for all claims

| Place of search | Date of completion of the search | Examiner |
|---|---|---|
| Munich | 6 May 2026 | Oiring, Vinicius |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................
& : member of the same patent family, corresponding document

EPO FORM 1503 03.82 (P04C01)

page 3 of 3

**EP 4 765 543 A1**

## ANNEX TO THE EUROPEAN SEARCH REPORT
## ON EUROPEAN PATENT APPLICATION NO.

EP 25 22 2406

06-05-2026

| Patent document cited in search report | Publication date | Patent family member(s) | Publication date |
|---|---|---|---|
| US 2017117710 A1 | 27-04-2017 | US 2017117710 A1 <br> WO 2015145784 A1 | 27-04-2017 <br> 01-10-2015 |
| US 2018287388 A1 | 04-10-2018 | NONE | |

EPO FORM P0459